# EUROPÄISCHE PATENTSCHRIFT

(11) **EP 0 785 717 B1**
(45) Veröffentlichungstag und Bekanntmachung des Hinweises auf die Patenterteilung: **19.08.1998**
(21) Anmeldenummer: 95935887.0
(22) Anmeldetag: 30.09.1995
(51) Int. Cl.: A01N 43/56

(54) **STABILE MISCHUNG, WELCHE WASSER UND METAZACHLOR ENTHÄLT**
STABLE MIXTURE CONTAINING WATER AND METAZACHLOR
MELANGE STABLE D'EAU ET DE METAZACHLOR

(30) Priorität: 11.10.1994 DE 4436293
(43) Veröffentlichungstag der Anmeldung: 30.07.1997
(73) Patentinhaber: BASF AKTIENGESELLSCHAFT, 67056 Ludwigshafen (DE)
(72) Erfinder: KARDORFF, Uwe, D-68159 Mannheim (DE); WIGGER, August, D-67141 Neuhofen (DE); KOBER, Reiner, D-67136 Fussgönheim (DE); PARG, Adolf, D-67098 Bad Dürkheim (DE)
(86) Internationale Anmeldenummer: EP9503882
(87) Internationale Veröffentlichungsnummer: WO9610913

(56) Entgegenhaltungen:
- CHEMICAL PATENTS INDEX, DOCUMENTATION ABSTRACTS JOURNAL Week 9022 Derwent Publications Ltd., London, GB; AN 90-169074 & JP,A,02 111 703 (DAIICHI KOGYO SEIYAKU) , 24.April 1990

## Beschreibung

Die vorliegende Erfindung betrifft eine stabile Mischung, welche Wasser und Metazachlor enthält, ihre Herstellung und Verwendung zur Bekämpfung unerwünschten Pflanzenwuchses.

Es ist allgemein bekannt, daß als Suspensionskonzentrate formulierte Pflanzenschutzmittel häufig eine Tendenz zu Sedimentierung des Wirkstoffs zeigen, und in vielen Fällen wird als Ursache die Kristallisation des Wirkstoffs angesehen.

Für wäßrige Spritzbrühen zweier fungizider Verbindungen vom Triazol-Typ etwa, hergestellt durch Verdünnen von Emulsionskonzentraten der Wirkstoffe mit Wasser, werden in der DE-A 39 10 921 N-Alkyllactame und in der DE-A 39 10 922 Distyrylphenyltriglykolether als Kristallisationshemmer vorgeschlagen.

Der WO 93/1560 ist zu entnehmen, daß sich u.a. auch aliphatische C₁-C₈-Carbonsäuren mit 1 bis 3 Carboxylgruppen und gewünschtenfalls Hydroxygruppen im Molekül als Kristallisationshemmer bei flüssigen Pestizid-Formulierungen, vor allem Emulsionskonzentraten, eignen.

Die EP-A 17 879 lehrt die Stabilisierung von wäßrigen Suspensionkonzentraten des Linurons gegen die Kristallisation des Wirkstoffs mittels fettlöslicher Disazofarbstoffe.

JP-A-2111703 offenbart stabilisierte wäßrige Suspensionen, die neben einem Wasser-unlöslichen Wirkstoff, ein thixotropes Polymer (c) enthalten. Polymer (c) ist zum Beispiel ein Copolymer, das durch Copolymerisation von Maleinsäureanhydrid und Isobutylen erhältlich ist, oder dessen Salze.

Es wurde schon früher gefunden, daß 2-Chlor-(2',6'-dimethyl-N-pyrazol-1-yl-methyl)-acetanilid, für das im folgenden der Common Name "Metazachlor" verwendet wird, verschiedene Kristallmodifikationen auszubilden vermag, wobei Suspensionkonzentrate des monoklinen Metazachlor weniger zur Sedimentbildung neigen, als jene von triklinem Metazachlor (vgl. EP-A 411 408).

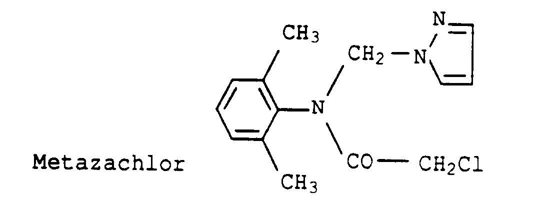

Vor allem bei erhöhten Umgebungstemperaturen kann die erreichte Lagerstabilität des wäßrigen Metazachlor-Suspensionskonzentrats - auch die der monoklinen Modifikation - jedoch immer noch nicht befriedigen. Ihre Verwendung gerade in wärmeren Klimaten ist somit stark eingeschränkt. Der vorliegenden Erfindung lag daher die Aufgabe zugrunde, diesem Mangel abzuhelfen.

Demgemäß wurde eine flüssige Mischung gefunden, welche enthält:
A) 2-Chlor-(2',6'-dimethyl-N-pyrazol-1-yl-methyl)-acetanilid, das bis zu 40 % seines Gewichts durch eines oder mehrere sonstige Pflanzenschutzmittel ersetzt sein kann,
B) ein Copolymer, das erhältlich ist durch Copolymerisation von
   b1) einem oder mehreren C₂-C₂₀-Monoolefinen,
   b2) einem oder mehreren monoolefinisch ungesättigten C₄-C₈-Anhydriden, und
   b3) gewünschtenfalls sonstigen monoolefinisch ungesättigten Verbindungen, welche mit den Comonomeren (b1) und (b2) copolymerisierbar sind,
   und dessen Anhydrid- und gegebenenfalls sonstige hydrolysierbare Gruppen und/oder freien Carboxylgruppen mindestens teilweise in die Salzform überführt wurden,
C) Wasser sowie
D) übliche Formulierungshilfsmittel.

Ferner wurden ein Verfahren zur Herstellung dieser Mischung sowie ihre Verwendung zur Bekämpfung unerwünschten Pflanzenwachstums gefunden.

Die wichtigste Ursache der stärkeren Sedimentbildung des Metazachlors in Suspensionskonzentraten bei erhöhten Temperaturen liegt vermutlich darin, daß der Wirkstoff Kristalle ausbildet, welche größer als die ursprünglichen (zudem überwiegend unregelmäßig geformten) Wirkstoffpartikel sind und sich daher in stärkerem Maße am Boden der Behälter absetzen.

Der Fachmann kennt bereits die Verwendung von Salzen von Maleinsäureanhydrid-Diisobutylen-Copolymeren zu dem Zweck, Granulate von Pflanzenschutzmitteln zu stabilisieren und ihren Auflösungsvermögen in Wasser zu verbessern (vgl. FR-A 2 545 325).

Ist Metazachlor der einzige Pflanzenschutzwirkstoff in der Mischung, so beträgt sein Anteil in der Regel 20 bis 60, vorzugsweise 40 bis 60 Gew.-%.

Die Herstellung von Metazachlor ist allgemein bekannt (vgl. DE-A 26 48 008, DE-A 28 30 764, EP-A 12 216.

Das Copolymer-Salz (B), welches der Mischung zugesetzt wird, um die Sedimentierung von Metazachlor zu verringern, enthält als essentielles Comonomer (b1) eines oder mehrere C₂-C₂₀-Monolefine, vorzugsweise C₄-C₁₂-Monoolefin, ganz besonders bevorzugt derartige 1-Olefine und vor allem die Trimethylpentene 2,4,4'-Trimethylpenten-2 und/oder 2,4,4'-Trimethylpenten-1 und zwar vorrangig im Verhältnis 0,6:1 bis 6:1 oder kommerziell erhältliches Diisobutylen.

Daneben eignen sich als Comonomere (b1) iso-Buten, Ethylen, Propylen, Buten-1, Styrol und α-Methylstyrol.

Der Anteil des Comonomers (b1) am Copolymer beträgt vorzugsweise 30 bis 50 und vor allem 40 bis 50 mol-%.

Bei dem zweiten essentiellen Comonomer (b2) des Copolymers handelt es sich um eines oder mehrere monoolefinisch ungesättigte C₄-C₈-Anhydride, vorzugsweise um derartige C₄-C₆-Anhydride, insbesondere Maleinsäureanhydrid und daneben Itaconsäureanhydrid, Citraconsäureanhydrid und Methylenmalonsäureanhydrid.

Der Anteil der Komponente (b2) am Comonomer beträgt vorzugsweise 50 bis 70 und insbesondere 50 bis 60 mol-%.

Das molare Verhältnis der Bestandteile (b2) und (b1) im Copolymer beträgt in der Regel 1:1 bis 20:1 und vorzugsweise 1:1.

Gewünschtenfalls kann die Copolymerisation der Komponenten (b1) und (b2) in Gegenwart sonstiger copolymerisierbarer monoolefinisch ungesättigter Verbindungen durchgeführt werden, welche insbesondere in Gegenwart der Comonomeren (b1) und (b2) unter den Bedingungen der Copolymerisation eine hinreichende Löslichkeit im Reaktionsmedium aufweisen.

Als solche Comonomeren (b3) eignen sich Acrylsäure und Methacrylsäure, welche freie Carboxylgruppen aufweisen, Acrylamid, Acrylnitril, Methacrylnitril, C₁-C₈-Alkylacrylate, C₁-C₈-Alkylmethacrylate, Vinylester von C₁-C₆-Carbonsäuren, mit C₁-C₈-Alkyl- oder C₆-C₂₀-Arylgruppen, N-substituierte Maleinsäureimide oder Mischungen der Comonomeren (b3).

Der Anteil der Komponente (b3) liegt gegebenenfalls in der Regel bei 0 bis 20 mol-%. Bevorzugt ist ein Anteil von 0 bis 10, und besonders bevorzugt von 0 bis 5 mol-%.

Vorzugsweise verwendet man zur Herstellung der erfindungsgemäßen Mischungen das Salz eines solchen Copolymers, welches lediglich aus den Komponenten (b1) und (b2) im Molverhältnis 1:1 besteht und vor allem eines alternierenden derartigen Copolymers.

Ganz besonders bevorzugt ist das Salz eines Copolymers dieser Zusammensetzung und dieses Aufbaus, welches durch Copolymerisation von Maleinsäureanhydrid und Diisobutylen erhalten wurde.

Die Copolymerisation der Comonomeren (b1), (b2) und gegebenenfalls (b3) kann nach an sich bekannten Methoden oder analog zu diesen erfolgen (vgl. z.B. EP-A 9 169, EP-A 9 170, EP-A 276 464).

Die Copolymerisate haben vorzugsweise ein Molgewicht von 1000 bis 100000, insbesondere von 2000 bis 50000 und vor allem von 10000 bis 20000 (Gewichtsmittel, bestimmt mittels Lichtstreuung).

Zur Herstellung der erfindungsgemäßen Mischung verwendet man ein Copolymer der vorstehend beschriebenen Art, bei dem die Anhydrid-Gruppen und gegebenenfalls die sonstigen hydrolysierbaren Gruppen, etwa Nitril- oder Estergruppen, und/oder freien Carboxylgruppen zumindest teilweise in die Salzform überführt wurden.

Vorzugsweise werden diese Gruppen zu 50 bis 90 und vor allem zu 60 bis 80 % (Neutralisationsgrad) in die Salzform überführt (neutralisiert).

Zur Herstellung dieser Salze wird das Produkt der Copolymerisation der Comonomeren (b1), (b2) und gegebenenfalls (b3) in der Regel zunächst in Wasser suspendiert und vorteilhafterweise unter Zuhilfenahme von Wasserdampf hydrolysiert. Durch Zusatz von geeigneten Mengen einer Base lassen sich die Carbonsäuregruppen danach in die Salzform überführen. Bei Verwendung verschiedener Basen sind auch gemischte Salze zugänglich.

Vorzugsweise stellt man Alkalimetallsalze, vor allem die Natrium- oder Kaliumsalze und daneben Erdalkalimetallsalze, Ammoniumsalze oder gemischte Salze des Copolymers her, wobei unter den Ammoniumsalzen solche mit folgenden Kationen bevorzugt sind: Ammonium (NH₄⁺), Ethanolammonium ([H₃NOCH₂CH₃]⁺) und Kationen des Typs NR₃H⁺, in denen die Reste R unabhängig voneinander stehen für
- C₁-C₁₀-Alkylgruppen, vorzugsweise C₁-C₄-Alkylgruppen wie die Methyl-, Ethyl-, iso-Propyl- und die n-Butylgruppe,
- C₁-C₄-Alkanolamingruppen, vorzugsweise die Methanolamin- und die Ethanolamingruppe,
- C₆-C₁₀-Arylgruppen, vorzugsweise die Phenylgruppe und/oder
- Aryl-(C₁-C₆)-alkylgruppen, vorzugsweise Aryl-(C₁-C₂)-alkylgruppen wie die Phenethyl- und die Benzylgruppe oder
in denen zwei Reste R, zusammen mit dem Stickstoffatom das sie trägt, einen Morpholin oder Piperidinring bilden.

Besonders bevorzugte Ammoniumsalze sind Ammonium- (NH₄⁺), Trimethylammonium-, Triethylammonium-, Ethanolammonium-, Diethanolammonium-, Triethanolanmonium- und Morpholiniumsalze.

Ganz besonders bevorzugt sind die Natriumsalze und daneben die Kalium- Calcium- und Ammoniumsalze (NH₄⁺) des Copolymers.

Für die Stabilisierung wäßriger Suspensionen von Metazachlor haben sich Copolymere, vorzugsweise alternierende Copolymere, von Diisobutylen und Maleinsäureanhydrid, deren Anhydridgruppen zu 50 bis 90, vor allem zu 60 bis 80 % zu Natriumcarboxylat-Gruppen hydrolysiert worden sind, als besonders geeignet erwiesen.

Das Copolymer-Salz (B) wird der Mischung vorteilhafterweise mit einer Teilchengröße von maximal 100, insbesondere von maximal 50 µm zugesetzt.

Der Anteil des Copolymer-Salzes in der Mischung liegt in der Regel bei 0,02 bis 10 und insbesondere bei 0,5 bis 4 Gew.-%, bezogen auf Metazachlor.

Neben Metazachlor, dem Salz des Copolymeren und Wasser enthält die erfindungsgemäße Mischung noch weitere übliche Formulierungshilfsmittel wie Dispergiermittel, Netzmittel, Verdickungsmittel, Antischaummittel, Bakterizide und Frostschutzmittel.

Der Anteil dieser Formulierungshilfsmittel beträgt in der Summe vorzugsweise 2 bis 15 und insbesondere 8 bis 13 Gew.-%, bezogen auf die fertige Mischung.

Es können handelsübliche wasserlösliche Dispergiermittel anionischen und nichtionischen Charakters der folgenden Strukturklassen zum Einsatz kommen:
R¹-SO₃-Salz, R²-SO₄-Salz, R³(EO)ₙ-H, R³-(PO)ₙ-H, R³-(EO)ₙ-(PO)ₘ-H.

In den vorstehenden Formeln haben die verwendeten Substituenten und die Indizes die folgende Bedeutung
- R¹: - geradkettiges oder verzweigtes Alkyl mit 1 bis 20 C-Atomen, vorzugsweise mit 8 bis 18 C-Atomen, beispielsweise Dodecyl;
- Aryl, z.B. Phenyl oder Naphthyl;
- Aryl, insbesondere Phenyl, welches eine geradkettige oder verzweigte Alkylgruppe, wie vorstehend genannt, trägt, z.B. Dodecylphenyl;
- ein Kondensationsprodukt aus Phenol mit Harnstoff und Formaldehyd;
- R²: - geradkettiges oder verzweigtes Alkyl mit 1 bis 20 C-Atomen, vorzugsweise mit 8 bis 18 C-Atomen, beispielsweise Dodecyl;
- Polyethoxy mit 2 bis 5 Ethoxy-Einheiten, welches eine geradkettige oder verzweigte Alkylgruppe trägt;
- Polyethoxy mit 2 bis 25 Ethoxy-Einheiten, welches einen durch geradkettiges oder verzweigtes Alkyl substituierten Arylrest trägt, z.B. Nonylphenylpolyethoxy mit 20 Ethoxy-Einheiten;
- R³: - geradkettiges oder verzweigtes Alkyl mit 1 bis 20 C-Atomen, vorzugsweise mit 8 bis 18 C-Atomen, beispielsweise Dodecyl;
- Aryl, insbesondere Phenyl, welches eine geradkettige oder verzweigte Alkylgruppe, wie vorstehend genannt, trägt, z.B. Dodecylphenyl;
(EO = Ethylenoxy; PO = Propylenoxy)
- n und m: unabhängig voneinander eine ganze Zahl von 4 bis 12;

Geeignete nichtionische Dispergiermittel sind ferner Propylenoxid-Ethylenoxid-Blockpolymeren der Formel 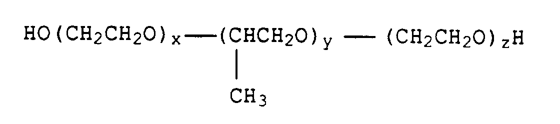 wobei x, y und z Zahlen darstellen, die so gewählt sind, daß das Molekulargewicht insgesamt über 1000 liegt. Die in der Praxis verwendeten Tenside dieses Typs sind im allgemeinen Gemische aus mehreren Verbindungen dieser Formel, die sich durch die Werte von x, y und z unterscheiden und üblicherweise durch Anlagerung von Ethylenoxid an Polypropylenglykol hergestellt werden. Beispiele sind Pluronic® PE 6200 und Pluronic® PE 10500.

Als Dispergiermittel können alle als Hilfsmittel zur Formulierung von Pflanzenschutzmitteln üblichen oberflächenaktiven Stoffe verwendet werden. Bevorzugtes Dispergiermittel ist das Natriumsalz eines Kondensationsproduktes aus Phenolsulfonsäure, Harnstoff und Formaldehyd. Solche Kondensationsprodukte werden beispielsweise in der DE-A 11 13 457 und der DE-A 11 78 081 beschrieben. Ein Beispiel für diese Verbindungsklasse ist Wettol® D1 (BASF).

Bei Verwendung von Blockpolymeren als Dispergiermittel wird ein Produkt mit einem Polyoxypropylenoxidkern mit einem Molekulargewicht von 3000 bis 3500 und einem Ethylenoxidgehalt von 50 %, d.h. mit einem Gesamtmolekulargewicht bei etwa 6000 bis 7000 bevorzugt. Beispiele für dieses Dispergiermittel sind die Pluronic®-Marken der BASF-Wyandotte Corporation.

Als Netzmittel in den erfindungsgemäßen Mischungen kommen folgende Produkte in Betracht:
- Polyoxyethylen-/Polyoxypropylen-Blockpolymere, wie die PLURONIC®-Marken Pluronic® PE 3100, PE 6100 und PE 8100 (BASF Wyandotte Corp.).
- Polyoxyethylen- oder Polyoxyethylen-/Polyoxypropylen-Fettalkohole wie WETTOL® LF (Fa.: BASF).
- Polyoxyethylen- oder Polyoxyethylen-/Polyoxypropylen-Fettamine wie ATPLUS® (Fa.: Atlas) und Ethomeen® (Fa.Akzo).
- Fettsäureester bzw. Fettsäureesterethoxylate wie ARLACEL®, ATMER®, ATMOS® und ATPET® (Fa.: Atlas).
- Polyoxyethylen- oder Polyoxyethylen-/Polyoxypropylen-Oxyalkohole wie LUTENSOL AO® und LUTENS0L TO® (Fa.: BASF).
- Polyoxyethylen- oder Polyoxyethylen-/Polyoxypropylen-Alkylphenolc wie LUTENSOL AP® (Fa.: BASF).

Die Netzmittel dienen dazu, die biologische Wirkung der Mischung durch Förderung der Benetzung und/oder des Transports des Wirkstoffs auf der Oberfläche und in die Pflanze zu unterstützen.

Als Verdickungsmittel kommen aus der Literatur bekannte Polysaccharide, vorzugsweise auf Xanthan-Gum-Basis, wie Kelzan® (Fa. Kelco, USA) oder Rhodopol® (Fa. Rhone-Poulenc) zum Einsatz.

Der erfindungsgemäßen Mischung können weiterhin übliche Frostschutzmittel, wie 1,2-Propylenglykol, Bakterizide und Antischaummittel zugesetzt werden.

Des weiteren kann die Mischung noch weitere Pflanzenschutzwirkstoffe enthalten. Diese treten mit bis zu 40, vorzugsweise bis zu 30 Gew.-% an die Stelle von Metazachlor.

Als weitere Pflanzenschutzmittel eignen sich vor allem Herbizide, z.B. 2-Chlor-4-ethylamino-6-iso-propylamino-s-triazin (Atrazin) oder 4-tert.-Butylamino-2-chlor-6-methylamino-s-triazin (Terbutylazin) und daneben Safener, z.B. 1-(Dichloracetyl)-hexahydro-3,3,8a-Trimethylpyrrolo-(1,2-a)-pyrimidin-6(2H)-on (Dicyclonon) und ferner Fungizide und/oder Wachstumsregulatoren.

Vorteilhafterweise wird zur Herstellung der Mischung soviel Wasser verwendet, daß der Wasseranteil in der Mischung, bezogen auf deren Gewicht, bei 30 bis 70 und insbesondere bei 40 bis 60 % liegt.

Die Herstellung der Mischung erfolgt in der Regel durch Vermischen ihrer Bestandteile. Um die gewünschten Teilchengrößen in der Mischung einzustellen, werden die festen Ausgangsstoffe vor dem Vermischen und/oder die fertige Mischung einem Mahlvorgang unterworfen. Vorzugsweise wird die fertige Mischung gemahlen. Der Mahlvorgang wird vorteilhafterweise in einer Reibkugelmühle, insbesondere mit gekühltem Gehäusemantel, vorgenommen. Die Arbeitstemperatur liegt dabei in der Regel bei 4 bis 40 und vor allem bei 20 bis 35°C.

In der so erhältlichen Mischung liegen in der Regel 20 bis 90 %, vorzugsweise 40 bis 70 % der Feststoffteilchen in einem Korngrößenbereich von <2 µm vor (Messung mittels Cilas Granulometer 715, Fa. Cilas, Marcoussis, Frankreich).

Der Feststoffanteil des Suspensionskonzentrates beträgt vorteilhafterweise 25 bis 60 und bevorzugt 40 bis 60 Gew.-%.

Die so erhaltene Mischung zeichnet sich durch eine verbesserte Lagerstabilität gegenüber solchen wäßrigen Formulierungen von Metazachlor aus, bei deren Herstellung auf den Zusatz eines Copolymer-Salzes der vorstehend beschriebenen Art verzichtet wurde.

Zur quantitativen Beurteilung der Lagerstabilität eignet sich die Messung der Vergrößerung der Feststoffpartikel in der Mischung im Laufe der Zeit. Die Messung kann in an sich bekannter Weise, z.B. mit einem nach dem Prinzip der Laserstrahlbeugung funktionierenden Gerät zur Teilchengrößenmessung, wie das Cilas Granulometer 715 (s.o.), an der verdünnten Mischung vorgenommen werden.

Zur Applikation der erfindungsgemäßen Mischung geht man normalerweise so vor, daß man sie zunächst in der Regel mit der 25- bis 1000-fachen, vorzugsweise der 50- bis 200-fachen Menge Wasser vermischt. In den Spritzbrühen stellt man durch Verdünnen der Mischung mit Wasser in der Regel einen Feststoffanteil von 0,1 bis 4 und insbesondere von 0,5 bis 2 Gew.-% ein. Danach bringt man die Spritzbrühe vor allem im Vorauflauf- oder Nachauflaufverfahren auf die Zielpflanzen und/oder in deren Lebensraum aus. Daneben kann man alternativ oder zusätzlich auch die Samen der Zielpflanze vor der Aussaat entsprechend behandeln.

Sind die durch Verdünnen mit Wasser erhältlichen Wirkstoffbrühen für gewisse Kulturpflanzen weniger verträglich, so können Ausbringungstechniken angewandt werden, bei welchen die Spritzbrühen mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen ("post-directed"- bzw. "lay-by"-Anwendung).

Die Aufwandmengen an Wirkstoff Metazachlor in Form der erfindungsgemäßen Mischung betragen je nach Bekämpfungsziel, Jahreszeit, Zielpflanze und deren Wachstumsstadium 0,5 bis 7, vorzugsweise 0,5 bis 5 und insbesondere 1 bis 3 kg/ha Anbaufläche.

Im übrigen ist die Anwendung von Suspensionskonzentraten von Planzenschutzwirkstoffen allgemein bekannt und bedarf daher keiner weiteren Erläuterung.

### Beispiel

Eine Mischung bestehend aus
- 50 Gew.-%: 2-Chlor-(2',6'-dimethyl-N-pyrazol-1-yl-methyl)-acetanilid (Metazachlor),
- 7 Gew.-%: 1,2-Propylenglykol als Frostschutzmittel,
- 2 Gew.-%: Wettol D1® (Natriumsalz eines Phenolsulfonsäure-Harnstoff-Formaldehyd-Kondensationsproduktes, Firma BASF, Deutschland) als Dispergiermittel,
- 0,3 Gew.-%: Kelzan® (Xanthan Gum-Polysaccarid, Firma Kelco, USA) als Verdickungsmittel,
- 3 Gew.-%: Pluronic PE® 10500 (Blockpolymerisat mit Polypropylenoxidkern der ungefähren Molmasse 3250, auf den bis zu einem Molekulargewicht von ungefähr 6500 Ethylenoxid aufgepropft ist) als Dispergiermittel und
- 37,7 Gew.-%: Wasser
wurde in einer diskontinuierlich arbeitenden Perlmühle (Typ Dyno KDL, Firma Bachofen) 0,25 Stunden gemahlen. Danach wurde die Teilchengröße mit einem Laserstrahlbeugungsmeßgerät (Typ Cilas 715, Firma Cilas, Marcoussis, Frankreich) ermittelt.

In einem zweiten Durchgang wurden der Mischung vor dem Mahlvorgang 10 Gewichtsteile eines handelsüblichen Natriumsalzes eines alternierenden Maleinsäureanhydrid-Diisobutylen-Copolymerisats (Molmasse: 12000 [Gewichtsmittel, gemessen mittels Lichtstreuung]; Neutralisationsgrad: 75 %) zugesetzt.

Nach einem sechsmonatigen Lagerversuch bei verschiedenen Temperaturen wurden die in der folgenden Tabelle zusammengestellten prozentualen Anteile an Teilchen, welche einen maximalen Durchmesser von kleiner oder gleich der jeweiligen Teilchengröße TG hatten, ermittelt.

| Teilechengrößenverteilung einer wäßrigen Suspension von Metazachlor mit und ohne Zusatz des Copolymers | | | | | | | | | | |
|---|---|---|---|---|---|---|---|---|---|---|
| TG [µm] | | Anteil (%) der Teilchen der, oder bis zur Teilchengröße TG | | | | | | | | |
| | Zeitpunkt der Messung | sofort | nach 6 Monaten Lagerzeit | | | | | | | |
| | Lagertemperatur | | 20°C | | 30°C | | 40°C | | 50°C | |
| | Zusatz des Copolymers | | ja | nein | ja | nein | ja | nein | ja | nein |
| 1 | | 33,4 | 37,3 | 39,4 | 34,7 | 34,7 | 30,2 | 19,4 | 22,4 | 7,2 |
| 1,5 | | 46,8 | 51,7 | 54,4 | 48,7 | 47,6 | 42,6 | 26,9 | 32,7 | 7,9 |
| 2 | | 72,2 | 77,0 | 78,3 | 74,8 | 70,5 | 67,8 | 45,2 | 57,5 | 8,4 |
| 3 | | 99,2 | 98,3 | 98,9 | 97 | 91,7 | 90,3 | 61,7 | 81,6 | 11,6 |
| 4 | | 100 | 99,9 | 100 | 99,4 | 96,4 | 95,5 | 72,9 | 89,4 | 17,3 |
| 6 | | | 99,9 | | 99,7 | 99,1 | 98,2 | 87,9 | 95,1 | 29,4 |
| 8 | | | 100 | | 100 | 100 | 100 | 97,8 | 98,6 | 43,3 |
| 12 | | | | | | | | 100 | 100 | 70,9 |
| 16 | | | | | | | | | | 86,1 |
| 24 | | | | | | | | | | 99,4 |
| 32 | | | | | | | | | | 99,5 |
| 48 | | | | | | | | | | 99,5 |
| 64 | | | | | | | | | | 99,7 |
| 96 | | | | | | | | | | 100 |

## Patentansprüche

1. Flüssige Mischung, enthaltend
A) 2-Chlor-(2',6'-dimethyl-N-pyrazol-1-yl-methyl)-acetanilid, das bis zu 40 % seines Gewichts durch eines oder mehrere sonstige Pflanzenschutzmittel ersetzt sein kann,
B) ein Copolymer, das erhältlich ist durch Copolymerisation von
b1) einem oder mehreren C₂-C₂₀-Monoolefinen,
b2) einem oder mehreren monoolefinisch ungesättigten C₄-C₈-Anhydriden, und
b3) gewünschtenfalls sonstigen monoolefinisch ungesättigten Verbindungen, welche mit den Comonomeren (b1) und (b2) copolymerisierbar sind,
und dessen Anhydrid- und gegebenenfalls sonstige hydrolysierbare Gruppen und/oder freien Carboxylgruppen mindestens teilweise in die Salzform überführt wurden,
C) Wasser sowie
D) übliche Formulierungshilfsmittel.

2. Mischung nach Anspruch 1, dadurch gekennzeichnet, daß sie
a) zu 20 bis 60 Gew.-% aus der Komponente A,
b) zu 0,02 bis 10 Gew.-% aus der Komponente B,
c) zu 30 bis 70 Gew.-% aus der Komponente C und
d) zu 2 bis 15 Gew.-% aus der Komponente D
besteht.

3. Mischung nach Anspruch 1 oder 2, dadurch gekennzeichnet, daß die Komponenten (b1) und (b2) im Copolymer äquimolar nebeneinander vorliegen.

4. Mischung nach den Ansprüchen 1 bis 3, dadurch gekennzeichnet, daß man als Komponente (b1) für die Herstellung des Copolymers Diisobutylen verwendet.

5. Mischung nach den Ansprüchen 1 bis 4, dadurch gekennzeichnet, daß man als Komponente (b2) für die Herstellung des Copolymers Maleinsäureanhydrid verwendet.

6. Mischung nach den Ansprüchen 1 bis 5, dadurch gekennzeichnet, daß man als Salz eines Copolymers ein Natriumsalz eines Diisobutylen-Maleinsäureanhydrid-Copolymers verwendet.

7. Verfahren zur Herstellung einer Mischung gemäß den Ansprüchen 1 bis 6, dadurch gekennzeichnet, daß man die Komponenten A bis D miteinander vermischt und die festen Komponenten vor dem Mischen und/oder die fertige Mischung einen Mahlvorgang unterwirft.

8. Verfahren zur Bekämpfung unerwünschten Pflanzenwachstums, dadurch gekennzeichnet, daß man die Samen, die Pflanzen und/oder deren Lebensraum mit einer herbizid wirksamen Menge der Mischung gemäß Anspruch 1 behandelt.

9. Verwendung einer Mischung gemäß Anspruch 1 zur Bekämpfung unerwünschten Pflanzenwachstums.

## Claims

1. Liquid mixture, comprising
A) 2-chloro-(2',6'-dimethyl-N-pyrazol-1-ylmethyl) acetanilide, which may be replaced to up to 40 % of its weight by one or more other crop protection agents,
B) a copolymer, obtainable by copolymerization of
b1) one or more C₂-C₂₀-monoolefins,
b2) one or more monoolefinically unsaturated C₄-C₈-anhydrides, and
b3) if desired, other monoolefinically unsaturated compounds which are copolymerizable with comonomers (b1) and (b2),
and its anhydride groups and, if appropriate, other hydrolyzable groups and/or free carboxyl groups, at least some of which have been converted into the salt form,
C) water and also
D) customary formulation auxiliaries.

2. Mixture according to Claim 1, characterized in that
a) from 20 to 60 % by weight of the mixture comprises the component A,
b) from 0.02 to 10 % by weight comprises the component B,
c) from 30 to 70 % by weight comprises the component C and
d) from 2 to 15 % by weight comprises the component D.

3. Mixture according to Claim 1 or 2, characterized in that the components (b1) and (b2) are present in equimolar amounts in the copolymer.

4. Mixture according to any of Claims 1 to 3, characterized in that the component (b1) used for preparing the copolymer is diisobutylene.

5. Mixture according to any of Claims 1 to 4, characterized in that the component (b2) used for preparing the copolymer is maleic anhydride.

6. Mixture according to any of Claims 1 to 5, characterized in that a sodium salt of a diisobutylene/maleic anhydride copolymer is used as salt of a copolymer.

7. Process for preparing a mixture according to any of Claims 1 to 6, characterized in that the components A to D are mixed with each other and the solid components, prior to mixing, and/or the made-up mixture are/is subjected to a milling process.

8. Method for controlling undesirable vegetation, characterized in that the seeds, the plants and/or their habitat are treated with a herbicidally effective amount of the mixture according to Claim 1.

9. The use of the mixture according to Claim 1 for controlling undesirable vegetation.

## Revendications

1. Mélange liquide contenant
A) le 2-chloro-(2',6'-diméthyl-N-pyrazol-1-yl-méthyl)-acétanilide, qui peut être remplacé en proportions allant jusqu'à 40 % de son poids par un ou plusieurs autres produits phytosanitaires,
B) un copolymère obtenu par copolymérisation de
b1) une ou plusieurs monoléfine en C2-C20,
b2) un ou plusieurs anhydrides à insaturation mono-oléfinique en C4-C8, et
b3) lorsqu'on le désire, d'autres composés à insaturation monooléfinique copolymérisables avec les comonomères b1) et b2),
et dont les groupes anhydrides et le cas échéant les autres groupes hydrolysables et/ou les groupes carboxyle libres ont été salifiés, en partie au moins,
C) de l'eau et
D) des produits auxiliaires usuels de formulation.

2. Mélange selon la revendication 1, caractérisé par le fait qu'il consiste
a) pour 20 à 60 % de son poids, en le composant A,
b) pour 0,02 à 10 % de son poids, en le composant B,
c) pour 30 à 70 % de son poids, en le composant C et
d) pour 2 à 15 % de son poids, en le composant D.

3. Mélange selon la revendication 1 ou 2, caractérisé par le fait que les composants b1) et b2) sont présents en proportions mutuelles équimoléculaires dans le copolymère.

4. Mélange selon les revendications 1 à 3, caractérisé par le fait que le composant b1) utilisé pour la préparation du prépolymère est le diisobutylène.

5. Mélange selon les revendications 1 à 4, caractérisé par le fait que le composant b2) utilisé pour la préparation du copolymère est l'anhydride maléique.

6. Mélange selon les revendications 1 à 5, caractérisé par le fait que l'on utilise, en tant que sel d'un copolymère, un sel de sodium d'un copolymère diisobutylène-anhydride maléique.

7. Procédé de préparation d'un mélange selon les revendications 1 à 6, caractérisé par le fait que l'on mélange entre eux les composants A) à D) après avoir broyé les composants solides et/ou on soumet le mélange fini à un broyage.

8. Procédé pour combattre les croissances de végétaux indésirables, caractérisé par le fait que l'on traite les graines, les végétaux et/ou leur habitat par une quantité efficace du mélange selon la revendication 1.

9. Utilisation d'un mélange selon la revendication 1 pour la lutte contre les croissances de végétaux indésirables.
